# EUROPEAN PATENT SPECIFICATION

(11) **EP 0 937 630 B1**
(45) Date of publication and mention of the grant of the patent: **27.04.2005**
(21) Application number: 99301233.5
(22) Date of filing: 19.02.1999
(51) Int. Cl.: B62D 25/20, B62D 29/00, B62D 21/15

(54) **Cross member of an automobile body**
Querträger fur Kraftfahrzeugkarrosserien
Traverse pour la caisse d'un véhicule automobile

(30) Priority: 19.02.1998 JP 3721798; 17.11.1998 JP 32702298
(43) Date of publication of application: 25.08.1999
(73) Proprietor: HONDA GIKEN KOGYO KABUSHIKI KAISHA, Minato-ku, Tokyo (JP)
(72) Inventor: Iwatsuki, Shuuichiro, Wako-shi, Saitama (JP); Aoki, Takeshi, Wako-shi, Saitama (JP)
(74) Representative: Leale, Robin George

(56) References cited:
- EP-A- 0 845 405
- DE-A- 4 138 371
- US-A- 4 747 636
- PATENT ABSTRACTS OF JAPAN vol. 1998, no. 13, 30 November 1998 (1998-11-30) & JP 10 203423 A (MAZDA MOTOR CORP), 4 August 1998 (1998-08-04)

## Description

This invention relates to a cross member extending in the width direction of an automobile body, which crosses a floor tunnel in the automobile body floor.

US 4747636 discloses a cross member of an automobile body, said cross member extending so as to cross a floor tunnel, both ends thereof being respectively joined to left and right side sills, said cross member comprising:
a first portion having a closed section;
a second portion extending downward from either a front side or a rear side of said first portion; and
a cut out portion formed in said second portion and matching a contour of the floor tunnel,
wherein ends of the closed section of said first portion are joined to inner sides of the respective side sills. DE 4138371 discloses a rear end design for a vehicle having a cross member formed as a compound beam.

It is desirable to reduce deformation of the passenger space in an automobile body caused not only by a head-on collision load but also by a side impact load. On the other hand, it is desirable to form an automobile body structure from aluminum alloy in order to decrease weight.

However, it is not easy to apply spot welding to aluminum alloy, so if the conventional method of welding steel sheets is used for welding aluminum alloy, production costs rise sharply.

Further, at the central portion of an automobile body floor in the width direction thereof, there is provided a so-called floor tunnel having a recessed surface opening downward and being continuous in the longitudinal direction of the automobile floor, in which a propeller shaft and an exhaust pipe are provided. A cross member, crossing the floor tunnel, extends in the lateral direction of the floor. Since the floor tunnel opens downwardly, the closed section of the cross member crossing the floor tunnel has to be divided into parts at the intersecting portion.

With a view to maintaining bending strength as much as possible, it is desirable not to sub-divide the cross member, because it plays an important part as a reinforcing member against side impact, and dividing it into parts cause its strength to be decreased.

In order to maintain the rigidity of the intersection of the cross member and the floor tunnel, a reinforcing member may be added to the cross member. However, the addition of such a reinforcing member complicates the process of producing the intersecting portion, which leads to an increase in production cost.

According to the invention, there is provided a cross member of an automobile body, said cross member being formed of extruded material and extending so as to cross a floor tunnel, both ends thereof being respectively joined to left and right side sills, said cross member comprising:
a first portion having a closed section;
a second portion extending downward from either a front side or a rear side of said first portion; and
a cut out portion formed in said second portion and matching a contour of the floor tunnel, an under surface of a bottom wall in the cross section of said first portion being joined to an upper surface of the floor tunnel;
wherein ends of the closed section of said first portion are joined to inner sides of the respective side sills.

A cross member of an automobile body floor according to a preferred form of the present invention extends in a direction to cross a floor tunnel. The ends of the cross member are joined to left and right side sills in a longitudinally intermediate region of the automobile body floor. The cross member is formed of an extruded material and has a first portion having a closed section and a second portion in the form of an apron extended downward from either the front or rear wall of the first portion. The second portion is formed with a cutout portion matching the contour of the floor tunnel and the bottom wall of the first portion is joined to the top of the floor tunnel. The ends of the closed sectional portion of the first portion are joined to the inner sides of the respective side sills. With this arrangement, the closed sectional portion extends over its whole length in the width direction of the automobile, whereby the bending rigidity of the cross member extending across the floor tunnel can be increased without causing complications in the manufacturing process.

Slide guide means such as T-slots may be provided in the surface of the bottom wall of the said first portion and a fastener member such as a T-nut may be mounted in said slide guide means for mounting an auxiliary mechanical member, such as a bracket for supporting a Bowden cable for a hand brake, or a fuel tank fastening band, at any desired position on the cross member.

Further, a frame member for use in forming a cross member crossing a floor tunnel in an automobile body is provided. A continuous closed sectional portion is formed by extruding a light metal material so that the closed sectional portion is positioned in the uppermost row. With this arrangement, the continuous closed section can be formed easily by extrusion.

Some embodiments of the invention will now be described by way of example and with reference to the accompanying drawings, in which:-
Fig. 1 is a perspective view of an automobile body frame according to a first embodiment of the present invention;
Fig. 2 is a vertical section view of a rear cross member;
Fig. 3 is a partial perspective view of the joint between a floor tunnel and the rear cross member;
Fig. 4 is a perspective view of the adjacent region of the rear cross member;
Fig. 5 is a sectional view taken along line V-V in Fig. 2;
Fig. 6 is a sectional view taken along line VI-VI in Fig. 2;
Fig. 7 is a vertical sectional view of another example of a cross member;
Fig. 8 is a perspective view of an automobile body frame according to a second embodiment of the present invention;
Fig. 9 is a side view of a middle cross member in Fig. 8; and
Fig. 10 is a perspective view of a connecting portion where a floor tunnel and the middle cross member are connected in Fig. 8.

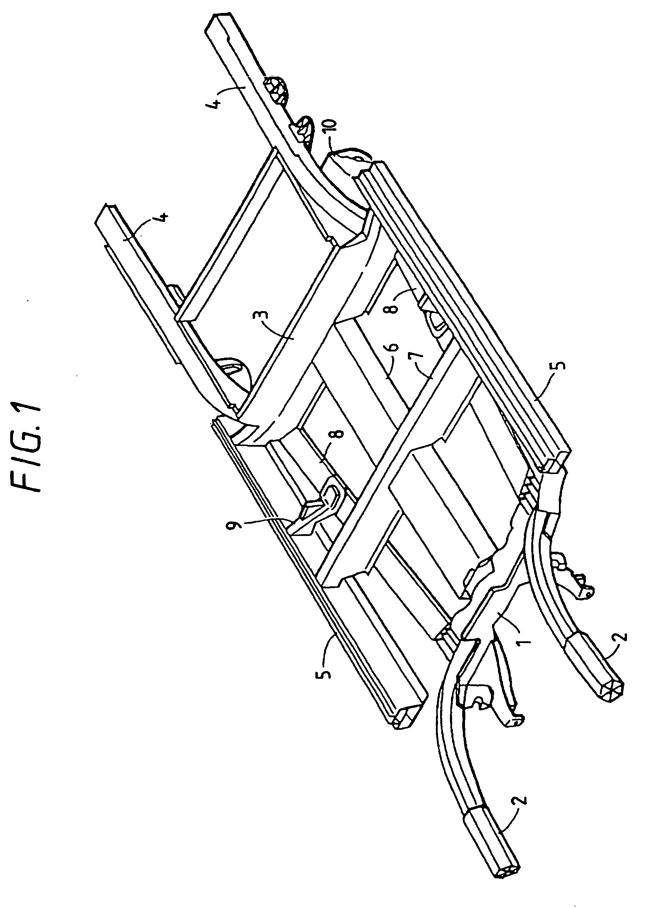

Referring first to Fig. 1, an automobile body frame is formed by welding together various members made of aluminum alloy, and comprises a pair of front side frames 2, pair of rear side frames 4, a pair of side sills 5, a floor tunnel 6, a middle cross member 7, a pair of floor beams 8, sheet rail brackets 9, and an outrigger 10.

The front side frames 2 extend forward, and the rear ends thereof are joined to a dash board lower cross member 1. The rear side frames 4 extend rearward, and the front ends thereof are joined to a rear cross member 3. The side sills 5 extend in the longitudinal direction and interconnect the respective ends of the dash board lower cross member 1 and the rear cross member 3. The floor tunnel 6 extends in the longitudinal direction and interconnects the central regions of the dash board lower cross member 1 and the rear cross member 3. The middle cross member 7 interconnects the side sills 5 in the longitudinally intermediate region of a passenger space. Each of the floor beams 8 connects the joint between the front side frame 2 and the dash board lower cross member 1 to the end of the rear cross member 3. The floor beams 8 are disposed so that the distance between them gradually increases toward the rear. The sheet rail brackets 9 are located to the rear of the middle cross member 7 and connect the side sills 5 to the respective hollow beams 8. The sheet rail brackets 9 support the rear ends of the sheet rails (not shown). The outrigger 10 is provided at the connection between the rear cross member 3, the rear side frame 4, the side sill 5 and the floor beam 8, to support a rear suspension arm.

Each of these members is formed of a hollow material by extrusion molding, except that the dash board lower cross member 1, the sheet rail brackets 9 and the outriggers 10 are formed by die casting.

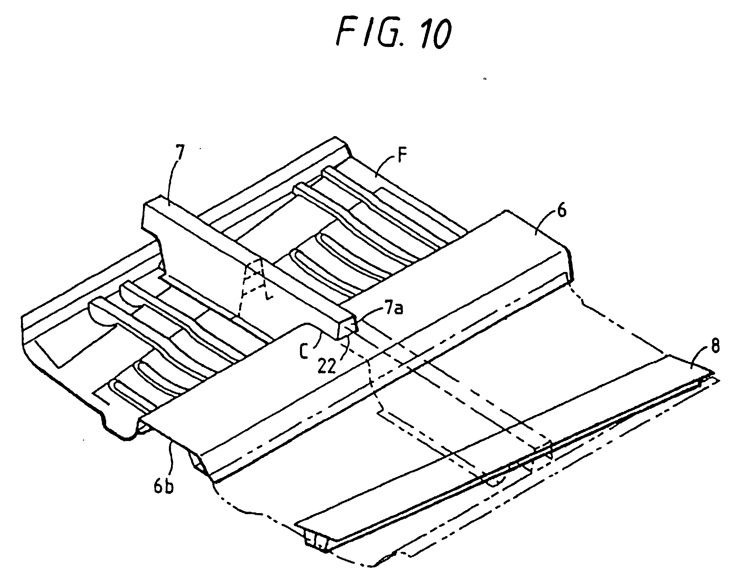

Although not illustrated in Fig. 1, flooring F which is formed by press-molding an aluminum alloy sheet is provided in a passenger space and in the trunk space (see Fig. 10).

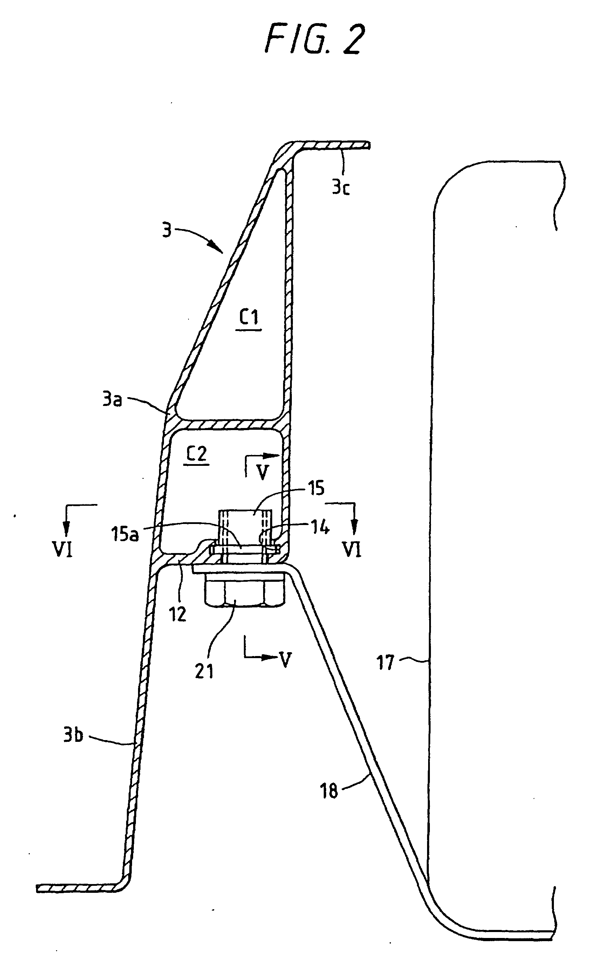

The rear cross member 3 connected to the rear end of the floor tunnel 6 is formed by extrusion molding from aluminum alloy. As shown in Fig. 2, the cross sectional shape of the rear cross member 3 includes a first portion 3a, a second portion 3b, and an eaves-like portion 3c. The first portion 3a is formed as two vertically stacked closed sectional portions C1, C2. The second portion 3b extends downwards from the front wall of the first portion 3a with its lower edge portion extended forward like an apron. The eaves-like portion 3c extends rearward from the top of the first portion 3a.

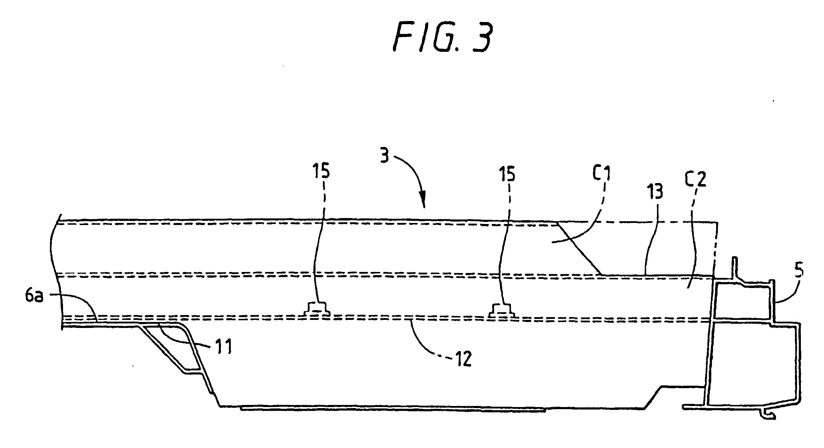

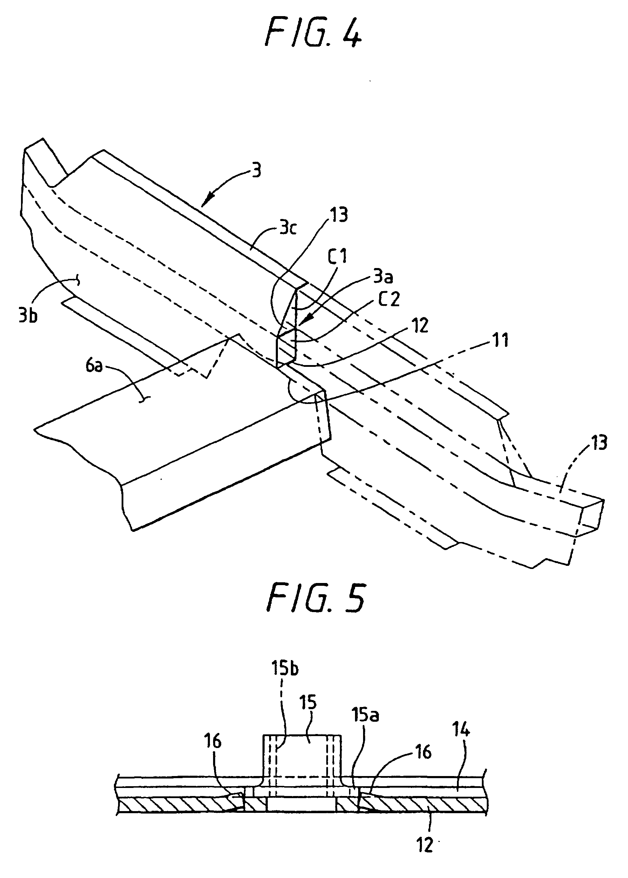

As shown in Figs. 3 and 4, a cutout portion 11 matching the contour of the floor tunnel 6 is formed in the center of the second portion 3b of the rear cross member 3. The undersurface of a bottom wall 12 of the first portion 3a engages with the flat top 6a of the floor tunnel 6 at the rear end portion of the floor tunnel, and these parts are joined by fillet welding where they engage.

Both of the end portions of the rear cross member 3 are curved rearwardly, and a portion above the partition wall 13 between the two closed sectional portions C1, C2 of the first portion 3a is cut off in these areas. Further, the ends of the lower closed sectional portion C2 and the second portion 3b are welded by fillet welding onto the inner sides of the side sills 5. Thus the side sills 5 are connected together via the rear cross member 3, whose hollow closed sectional portion C2 is continuous over its whole length, in the width direction of the automobile.

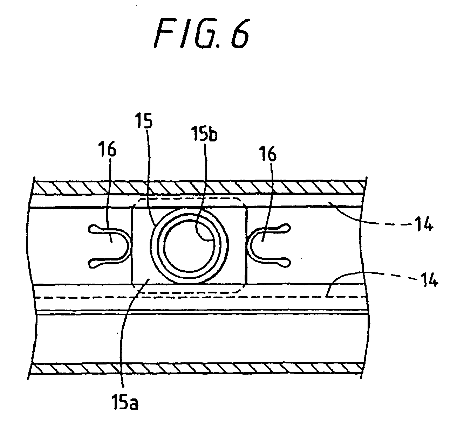

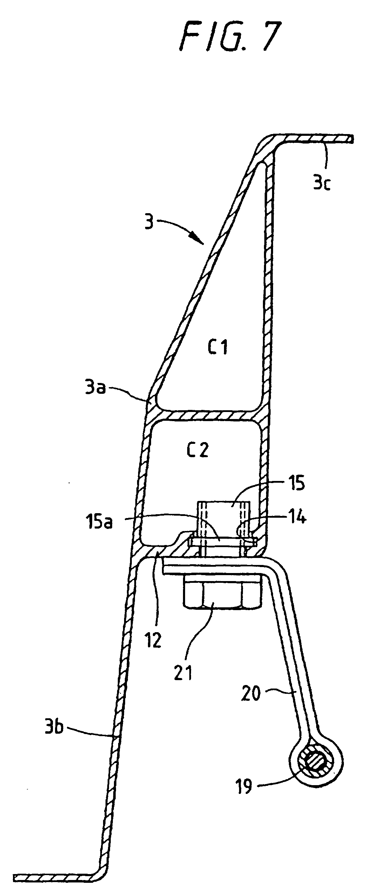

T-slots 14 are formed in the surface of the bottom wall 12 of the first portion 3a of the rear cross member 3 as shown in Fig. 2, and a rectangular expanded portion 15a formed on the end portion of a T-nut 15 mates with each T-slot as shown in Figs. 5 and 6. U-shaped cut and raised portions 16 which mate with the left and right ends of the expanded portion 15a are formed at suitable positions in the bottom wall 12 to locate each T-nut 15 properly. Since the T-nut 15 mates with the T-slots 15 by means of the rectangular expanded portion 15a, turning of the T-nut is prevented when a bolt 21 is inserted to fasten an auxiliary mechanical member such as a band 18 (see Fig. 2) for fixing, for example, a fuel tank 17 or a bracket 20 (see Fig. 7) for supporting a Bowden cable 19 for a hand brake.

As many T-nuts 15 may be provided as may be desired, at any positions in the T-slots. In this embodiment T-nuts 15 are provided symmetrically in two places on the left- and right-hand sides, two of them inside for brackets 20 for supporting a Bowden cable 19 for a hand brake, and two of them outside for bands 18 for fixing a fuel tank 17.

In the above described embodiment, deformation of the passenger space due to side impact can effectively be restrained without incurring an increase in production cost, because a highly rigid cross member is provided in a comparatively simple manner. Moreover, the slide guide means such as the T-slots are provided in the surface of the bottom wall of the first portion of the cross member. Since a fastener member such as a T-nut is easily provided in the closed sectional portion by slidably engaging the fastener member with the slide guide means, an auxiliary mechanical member can be fitted in any given position of the cross member without reducing the strength of the latter.

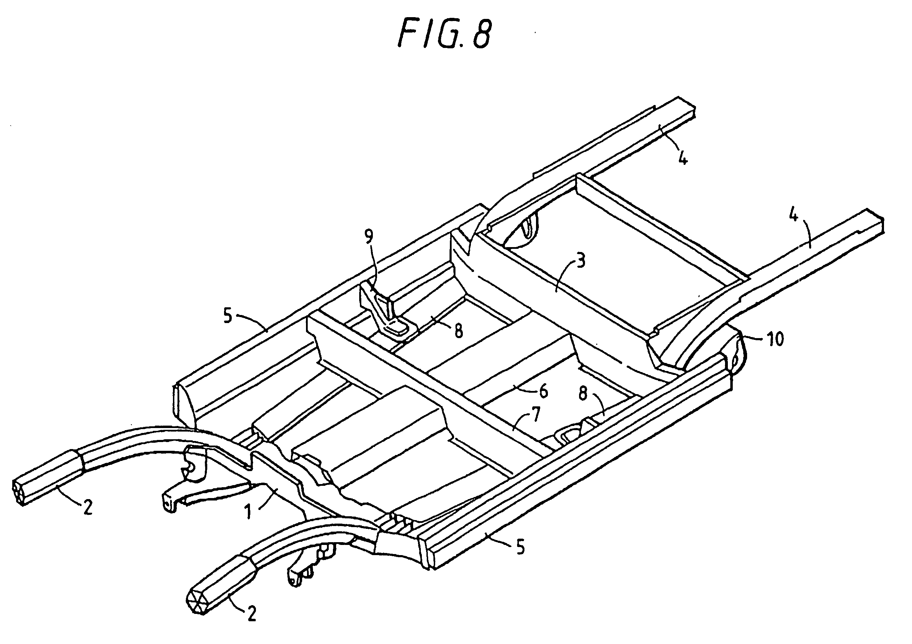

Figs. 8 to 10 show a second embodiment of the invention. Parts similar to those of the first embodiment are designated by the same numbers and explanation thereof will be omitted.

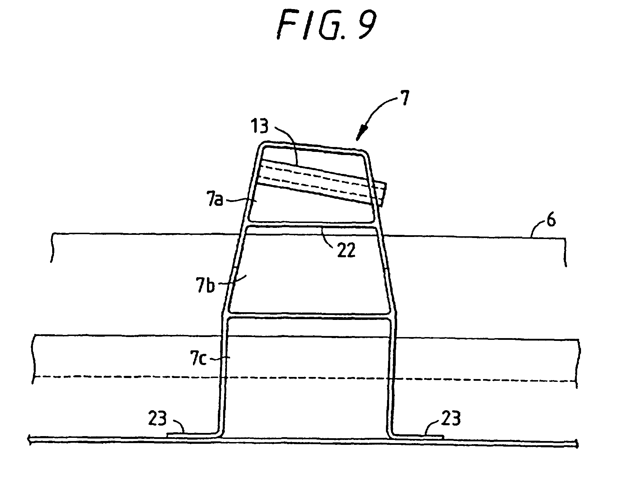

In this embodiment the middle cross member 7 which crosses the floor tunnel medially of its length is formed as an aluminum alloy extrusion, as shown in Fig. 9. The sectional shape comprises a combination of two closed sectional portions 7a and 7b, one above the other, which are substantially trapezoidal in sectional contour, and a hat-like sectional portion 7c having flanges 23 extending outwardly at its respective edges.

As shown in Fig. 10, the floor tunnel 6 is also formed as an aluminum alloy extrusion, with a recessed surface 6b opening downward, and a flat top.

A cut out portion C matching the outer contour of the floor tunnel 6 is formed in the intersecting portion of the middle cross member 7. However, the partition wall 22 between the closed sectional portions 7a and 7b is left intact, so that the uppermost sectional portion 7a is kept closed.

Nut members 13 with screw holes for receiving bolts are secured in suitable places to the middle cross member 7, for such member to function as a sheet rail mount.

Since laterally continuous closed sections can be relatively easily provided in a cross member according to the present invention, the passenger space in the automobile body can be provided with sufficient bending rigidity without increasing the overall production cost. Therefore, both the NVH (noise vibration harshness) properties of the automobile body and deformation of the passenger space due to a collision load can be reduced.

It will thus be seen that the present invention, at least in its preferred forms, provides a cross member made of aluminum alloy for an automobile body floor and structured so as to be rigid enough to restrain deformation of a passenger space at the time of a side impact, without incurring a steep rise in production cost, and furthermore provides an improved frame member for use in forming a cross member in which the lowering of its strength is minimized.

## Claims

1. A cross member (3) of an automobile body, said cross member being formed of extruded material and extending so as to cross a floor tunnel (6), both ends thereof being respectively joined to left and right side sills (5), said cross member comprising:
a first portion (3a) having a closed section;
a second portion (3b) extending downward from either a front side or a rear side of said first portion; and
a cut out portion (11) formed in said second portion and matching a contour of the floor tunnel, an under surface of a bottom wall (12) in the cross section of said first portion being joined to an upper surface (6a) of the floor tunnel;
wherein ends of the closed section of said first portion are joined to inner sides of the respective side sills.

2. A cross member according to claim 1, wherein said first portion (3a) comprises an upper closed sectional portion (C1) and a lower closed sectional portion (C2) vertically stacked relative to each other, end portions of said upper closed portion being cut off, and the ends of said lower closed portion and said second portion (3b) being joined to inner sides of the respective side sills.

3. A cross member according to claim 1 or 2, further comprising slide guide means (14) on an upper surface of the said bottom wall (12) of said first portion (3a), a fastener member (15) being slidably fitted to said slide guide means for mounting an auxiliary mechanical member.

4. A cross member according to claim 3, wherein said slide guide means is T-slots (14) formed in the upper surface of said bottom wall (12) of said first portion (3a), and said fastener member is a T-nut (15) having an expanded portion (15a) to mate with said T-slots.

5. A cross member according to claim 4, wherein a cut and raised portion (16) is formed on the upper surface of said bottom wall (12) to mate with the expanded portion (15a) of said T-nut (15).

6. A frame member for use in a cross member as claimed in claim 1, comprising a continuous closed sectional portion formed by extruding a light metal material so that a closed sectional portion is positioned in an uppermost row in the closed sectional portion.

7. A frame member according to claim 6, wherein the closed sectional portion is joined to the floor tunnel (6) so as to extend continuously in the lateral direction above an upper surface of the floor tunnel.

8. A frame member according to claim 6 or 7, wherein the closed sectional portion of said closed sectional portion comprises an upper closed sectional portion and a lower closed sectional portion vertically stacked relative to each other, and an apron portion extending from a lower end of said lower closed portion.

## Patentansprüche

1. Querelement (3) eines Automobilkörpers, wobei das Querelement aus extrudiertem Werkstoff gebildet ist und derart verläuft, dass es einen Bodentunnel (6) kreuzt, wobei seine beiden Enden mit einem linken bzw. einem rechten Seitenschweller (5) verbunden sind, wobei das Querelement umfasst:
einen ersten Abschnitt (3a) mit einem geschlossenen Profil;
einen zweiten Abschnitt (3b), welcher von entweder einer Vorderseite oder einer Rückseite des ersten Abschnitts aus nach unten verläuft; und
einen Ausschnittsabschnitt (11), welcher in dem zweiten Abschnitt ausgebildet ist und zu einer Kontur des Bodentunnels passt, wobei eine untere Fläche einer Bodenwand (12) in dem Querschnitt des ersten Abschnitts mit einer oberen Fläche (6a) des Bodentunnels verbunden ist;
wobei Enden des geschlossenen Profils des ersten Abschnitts mit Innenseiten der jeweiligen Seitenschweller verbunden sind.

2. Querelement nach Anspruch 1, bei welchem der erste Abschnitt (3a) einen oberen Abschnitt (C1) mit geschlossenem Profil und einen unteren Abschnitt (C2) mit geschlossenem Profil relativ zueinander in vertikaler Richtung gestapelt umfasst, wobei Endabschnitte des oberen geschlossenen Abschnitts abgeschnitten sind und die Enden des unteren geschlossenen Abschnitts und der zweite Abschnitt (3b) mit Innenseiten der jeweiligen Seitenschweller verbunden sind.

3. Querelement nach Anspruch 1 oder 2, ferner umfassend Gleitführungsmittel (14) an einer oberen Fläche der Bodenwand (12) des ersten Abschnitts (3a), ein Befestigungselement (15), welches verschiebbar an den Gleitführungsmitteln angebracht ist, um ein mechanisches Hilfselement anzubringen.

4. Querelement nach Anspruch 3, wobei die Gleitführungsmittel T-Schlitze (14) sind, welche in der oberen Fläche der Bodenwand (12) des ersten Abschnitts (3a) ausgebildet sind, und das Befestigungselement eine T-Mutter (15) mit einem erweiterten Abschnitt (15a) ist, so dass sie mit den T-Schlitzen zusammenpasst.

5. Querelement nach Anspruch 4, bei welchem ein ausgeschnittener und erhabener Abschnitt (16) an der oberen Fläche der Bodenwand (12) ausgebildet ist, um mit dem erweiterten Abschnitt (15a) der T-Mutter (15) zusammenzupassen.

6. Rahmenelement zur Verwendung in einem Querelement nach Anspruch 1, umfassend einen durchgehenden Abschnitt mit geschlossenem Profil, welcher durch Extrudieren eines Leichtmetallwerkstoffes ausgebildet ist, so dass ein Abschnitt mit geschlossenem Profil in einer obersten Reihe in dem Abschnitt mit geschlossenem Profil angeordnet ist.

7. Rahmenelement nach Anspruch 6, bei welchem der Abschnitt mit geschlossenem Profil mit dem Bodentunnel (6) derart verbunden ist, dass er kontinuierlich in der Querrichtung über einer oberen Fläche des Bodentunnels verläuft.

8. Rahmenelement nach Anspruch 6 oder 7, bei welchem der Abschnitt mit geschlossenem Profil des Abschnitts mit geschlossenem Profil einen oberen Abschnitt mit geschlossenem Profil und einen unteren Abschnitt mit geschlossenem Profil umfasst, welche relativ zueinander in vertikaler Richtung gestapelt sind, sowie einen Schürzenabschnitt umfasst, welcher von einem unteren Ende des unteren geschlossenen Abschnitts aus absteht.

## Revendications

1. Traverse (3) pour la caisse d'un véhicule automobile, ladite traverse étant formée à partir de matériau extrudé et s'étendant afin de traverser un tunnel de transmission de plancher (6), ses deux extrémités étant respectivement assemblées aux seuils latéraux gauche et droit (5), ladite traverse comprenant :
une première partie (3a) ayant une section fermée ;
une seconde partie (3b) s'étendant vers le bas à partir d'un côté avant ou d'un côté arrière de ladite première partie ; et
une partie découpée (11) formée dans ladite seconde partie et épousant un contour du tunnel de transmission de plancher, une surface inférieure d'une paroi inférieure (12) dans la section transversale de ladite première partie étant assemblée à une surface supérieure (6a) du tunnel de transmission de plancher ;
dans laquelle les extrémités de la section fermée de ladite première partie sont assemblées aux côtés internes des seuils latéraux respectifs.

2. Traverse selon la revendication 1, dans laquelle ladite première partie (3a) comprend une partie de section fermée supérieure (C1) et une partie de section fermée inférieure (C2) verticalement empilées l'une sur l'autre, les parties d'extrémité de ladite partie fermée supérieure étant coupées, et les extrémités de ladite partie fermée inférieure et ladite seconde partie (3b) étant assemblées aux côtés internes des seuils latéraux respectifs.

3. Traverse selon la revendication 1 ou 2, comprenant en outre des moyens de guidage coulissant (14) sur une surface supérieure de ladite paroi inférieure (12) de ladite première partie (3a), un élément de fixation (15) étant monté de manière coulissante sur lesdits moyens de guidage coulissant pour monter un élément mécanique auxiliaire.

4. Traverse selon la revendication 3, dans laquelle lesdits moyens de guidage coulissant sont des fentes en forme de T (14) formées dans la surface supérieure de ladite paroi inférieure (12) de ladite première partie (3a), et ledit élément de fixation est un écrou en forme de T (15) ayant une partie dilatée (15a) pour se coupler avec lesdites fentes en forme de T.

5. Traverse selon la revendication 4, dans laquelle une partie coupée et surélevée (16) est formée sur la surface supérieure de ladite paroi inférieure (12) pour se coupler avec la partie dilatée (15a) dudit écrou en forme de T (15).

6. Elément de châssis destiné à être utilisé dans une traverse selon la revendication 1, comprenant une partie de section fermée continue formée en extrudant un matériau en métal léger de sorte que la partie de section fermée est positionnée dans une rangée située le plus haut dans la partie de section fermée.

7. Elément de châssis selon la revendication 6, dans lequel la partie de section fermée est assemblée au tunnel de transmission de plancher (6) afin de s'étendre de manière continue dans une direction latérale au dessus d'une surface supérieure du tunnel de transmission de plancher.

8. Elément de châssis selon la revendication 6 ou 7, dans lequel la partie de section fermée de ladite partie de section fermée comprend une partie de section fermée supérieure et une partie de section fermée inférieure empilées verticalement l'une sur l'autre, et une partie de tablier s'étendant à partir d'une extrémité inférieure de ladite partie fermée inférieure.
